**Europäisches Patentamt**

(19) **European Patent Office**

**Office européen des brevets**

(11) Publication number : **0 564 557 B1**

# (12) EUROPEAN PATENT SPECIFICATION

(45) Date of publication of patent specification :
27.07.94 Bulletin 94/30

(51) Int. Cl.⁵ : **B60P 1/54**

(21) Application number : **92903098.9**

(22) Date of filing : **03.01.92**

(86) International application number :
**PCT/NL92/00001**

(87) International publication number :
**WO 92/12025 23.07.92 Gazette 92/19**

(54) **VEHICLE, AND METHOD FOR LOADING/UNLOADING SUCH VEHICLE.**

(30) Priority : **03.01.91 NL 9100003**

(43) Date of publication of application :
**13.10.93 Bulletin 93/41**

(45) Publication of the grant of the patent :
**27.07.94 Bulletin 94/30**

(84) Designated Contracting States :
**AT BE CH DE DK ES FR GB GR IT LI LU MC NL SE**

(56) References cited :
**DE-A- 1 555 874**
**DE-A- 3 307 640**
**GB-A- 2 105 294**
**US-A- 2 821 428**

(73) Proprietor : **JAN VAN HÜET TRANSPORT B.V.**
**P.O. Box 83**
**NL-6900 AB Zevenaar (NL)**

(72) Inventor : **VAN HUET, Aloisius, Leonardus,**
**Johannes, Maria**
**de Horst 13**
**NL-6902 PB Zevenaar (NL)**

(74) Representative : **Smulders, Theodorus A.H.J.,**
**Ir. et al**
**Vereenigde Octrooibureaux**
**Nieuwe Parklaan 97**
**NL-2587 BN 's-Gravenhage (NL)**

## Description

The invention relates to a vehicle with a loading space for transporting objects, which vehicle is provided with a conveyor track fitted in the top of the loading space and running in the lengthwise direction of the vehicle, a displacement element movable along the conveyor track, and gripping elements coupled to the displacement element, for gripping an object.

Such a vehicle is known from DE-A- 1 555 874, and is suitable in particular for transporting heavy and breakable sheet-type objects such as sheets of glass.

In general, during loading or unloading of a transport vehicle the problem occurring is how the objects to be transported should be placed from outside in their place in the vehicle, or how the transported objects should be removed from the vehicle. A possible solution is, of course, to lift the objects by hand and place them, but this is undesirable, certainly if the objects are heavy, on account of the number of people required for this and the time needed.

Another general solution is to make use of a special loading/unloading vehicle, for example a hand truck, but in this case it is necessary to use a loading platform or a liftable loading flap of the transport vehicle. A first disadvantage here is that the transport vehicle can be used only at loading/unloading places where such facilities are present, or that the transport vehicle itself must always take a loading/unloading vehicle with it. A general disadvantage of the use of a liftable loading flap is that it is difficult or totally impossible with it to handle objects with substantial dimensions, unless the loading flap is made extremely large in the lengthwise direction of the transport vehicle. A general disadvantage of the use of a loading/unloading vehicle is that it is difficult with it to place elongated objects in the lengthwise direction of the transport vehicle, because objects once placed in the transport vehicle reduce the clear width for the loading/unloading vehicle. If the objects can be placed only in the breadthwise direction of the transport vehicle, this means an unacceptable limitation of the maximum transportable length of the objects.

In order to overcome the abovementioned problems, the already known transport vehicle has a conveyor track fixed to the ceiling of the loading space and running in the lengthwise direction of the transport vehicle, from which conveyor track a pulley which can be moved along the conveyor track is suspended. Hanging from the pulley is a gripping element, for example a hook, by which an object can be gripped, with or without the intervention of auxiliary elements such as ropes. When the known transport vehicle is being loaded, an object outside the transport vehicle is gripped, lifted up until it is above the level of the loading floor, and conveyed along the conveyor track in the lengthwise direction of the transport vehicle through the loading space to a desired position, and is set down there and secured relative to the transport vehicle.

However, this method of loading/unloading means that the maximum permissible vertical measurement of the objects which can be transported with the known transport vehicle is limited. During the transportation in the loading space the object hangs from the pulley and the underside of the object must be clear of the loading floor. A certain minimum bottom space must therefore be present between the underside of the object and the loading floor, while a certain top space must be present between the top side of the object and the ceiling of the loading space. In the vertical direction, called the height below, the object must therefore have a measurement which may be at most equal to the height of the loading space minus the abovementioned bottom space, minus the abovementioned top space. It must be remembered here that the height of the loading floor in practice is partly determined by the necessary presence of wheels under the vehicle, and that the maximum height of a transport vehicle in many countries is subject to a legally stipulated maximum, in the Netherlands 4 metres.

One object of the present invention is therefore to improve the known vehicle.

A particular object of the invention is to provide a transport vehicle with which it is possible to carry and load and unload larger objects than is currently possible, without the need for special facilities to be present at a delivering or receiving station.

According to an important aspect of the invention, for this purpose the conveyor track is vertically movable together with the ceiling of the loading space.

The conveyor track is preferably movable in its lengthwise direction.

The invention also relates to a method for loading/unloading such a vehicle. Such a method is according to the invention characterised in that, prior to the actual loading/unloading, the conveyor track is moved vertically upwards and preferably also moved along its lengthwise direction, so that it extends to beyond the loading space, and in that the conveyor track is returned to the initial position after the actual loading/unloading is completed.

The invention will be explained in greater detail below through the description of a preferred embodiment of the vehicle according to the invention, with reference to the drawing. In the drawing:

Figure 1A shows a schematic side view, partially cut away, of a known transport vehicle with an object in the loading space;

Figure 1B shows a schematic rear view of the transport vehicle shown in Figure 1A;

Figure 2A shows a schematic rear view of a preferred embodiment of the vehicle according to the invention, in which the conveyor track is moved vertically upwards, and in which the object being carried is higher than the object being carried in Figure 1B;
Figure 2B shows a rear view comparable to that of Figure 2A, in which the conveyor track is moved vertically downwards;
Figure 3A shows schematically a partial cross-section of the vehicle shown in figures 2A - 2B;
Figure 3B shows schematically a longitudinal section along the line B - B in Figure 3A;
Figure 3C shows a design detail from Figure 3B;
Figure 4A shows a schematic top view of an embodiment of the vehicle according to the invention;
Figure 4B shows a schematic section along the line B - B in Figure 4A;
Figure 5A shows a side view, comparable to that of Figure 1A, of a preferred embodiment of the vehicle according to the invention;
Figure 5B shows the vehicle of Figure 5A in the loading/unloading state, in which the conveyor track is moved backwards in its lengthwise direction and is projecting from the loading space;
Figure 6 shows a top view of the vehicle shown in Figure 5B, in which the conveyor track is moved to the side of the transport vehicle;
Figure 7A shows a design detail, comparable to that of Figure 3A, of an embodiment with a laterally movable conveyor track; and
Figure 7B shows a design detail comparable to the embodiment shown in Figure 7A.

The same or comparable parts are indicated by the same reference numbers in the figures.

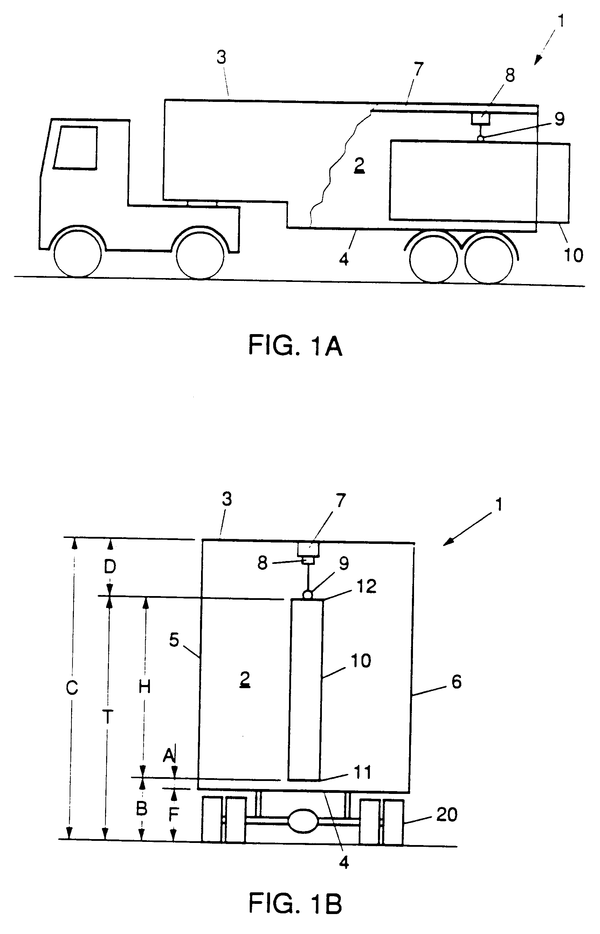

Figures 1A and 1B show a known transport vehicle 1 with a loading space 2 provided with a ceiling 3, a loading floor 4, and side walls 5 and 6. The vehicle 1 is provided with a conveyor track 7 which is fixed to the ceiling 3 in the top of the loading space 2 and runs in the lengthwise direction of the vehicle 1, and along which a pulley 8 is movable. The pulley 8 is provided with gripping elements 9 such as a hook, for gripping an object 10, which gripping elements 9, for the sake of simplicity, are indicated schematically as a circle.

A number of vertical measurements are also indicated in Figure 1B. The height of the floor 4 of the loading space 2 relative to the road surface is indicated by F, and has a certain minimum value which is partly determined by the presence of wheels 20, and which is in practice about 83 cm. The height of the ceiling 3 of the loading space 2 relative to the road surface is indicated by C, and is a certain maximum value laid down by statutory regulations, which is 4 metres in the Netherlands. During the movement of the object 10 in the loading space 2 a minimum play A must be present between the bottom 11 of the object 10 and the floor 4 of the loading space 2, while a minimum play D must be present between the top 12 of the object 10 and the ceiling 3 of the loading space 2, which play is determined by the presence of the conveyor track 7, the pulley 8 and the gripping elements 9. The maximum permitted vertical measurement H of the object 10, which is the difference between the maximum permitted height position T and the minimum permitted height position D, is thus given by:

$$H = T - B = C - F - A - D,$$

while the loading height $H_{max}$ which is in principle available in the loading space 2 is given by $H_{max} = C - F$.

The transport vehicle according to the invention, indicated in the figures by 2 and further in its entirety by reference number 30, does not have the above-mentioned limitations, or at least to a greatly reduced extent.

According to an important aspect of the invention, the transport vehicle 30 has a conveyor track 37 which is vertically movable, together with the ceiling 33, preferably over a distance which is at least equal to the sum of the distances A and D already discussed above. This makes it possible to transport higher objects than is possible with the known vehicle 1.

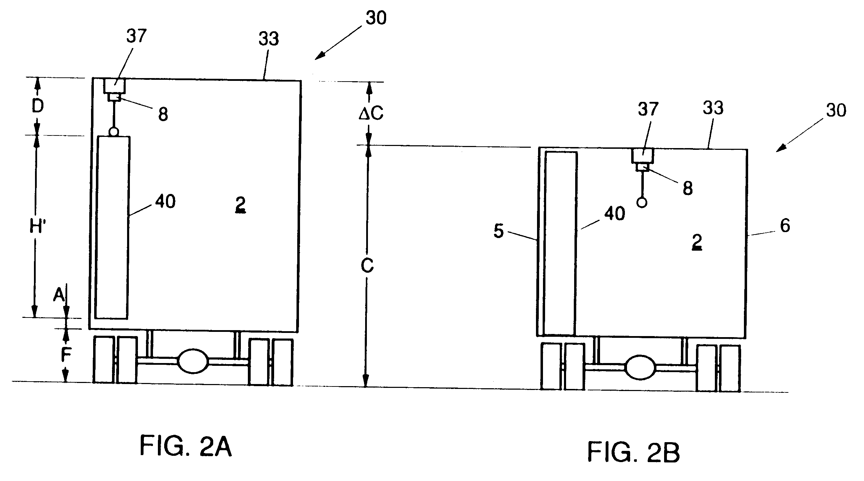

When the transport vehicle 30 is travelling in the traffic the ceiling 33 and the conveyor track 37 are in the lowest end position, as shown in Figure 2B, in which position the height C of the ceiling 33 meets the statutorily stipulated maximum measurement, so that when the ceiling 33 and the conveyor track 37 are in the transport position the measurements of the loading space 2 correspond to those of the known vehicle 1 illustrated in Figure 1B.

When the transport vehicle 30 is being loaded or unloaded, the ceiling 33 and the conveyor track 37 can be raised to a higher position relative to the transport position. Figure 2A illustrates the highest end position, in which the difference between the nighest end position and the lowest end position is indicated by $\Delta C$. In this end position, indicated below as the loading/unloading position, an object 40 with a maximum permitted height H′ can be loaded/unloaded, for which the following applies: $H′ = C + \Delta C - F - A - D$, while the loading height $H_{max}$ available in principle in the loading space 2 in the transport position is given by $H_{max} = C - F$. It will be clear that if $\Delta C$ is at least equal to A + D, objects of which the height H′ corresponds to the maximum available loading height $H_{max}$ in the loading space 2 can be transported.

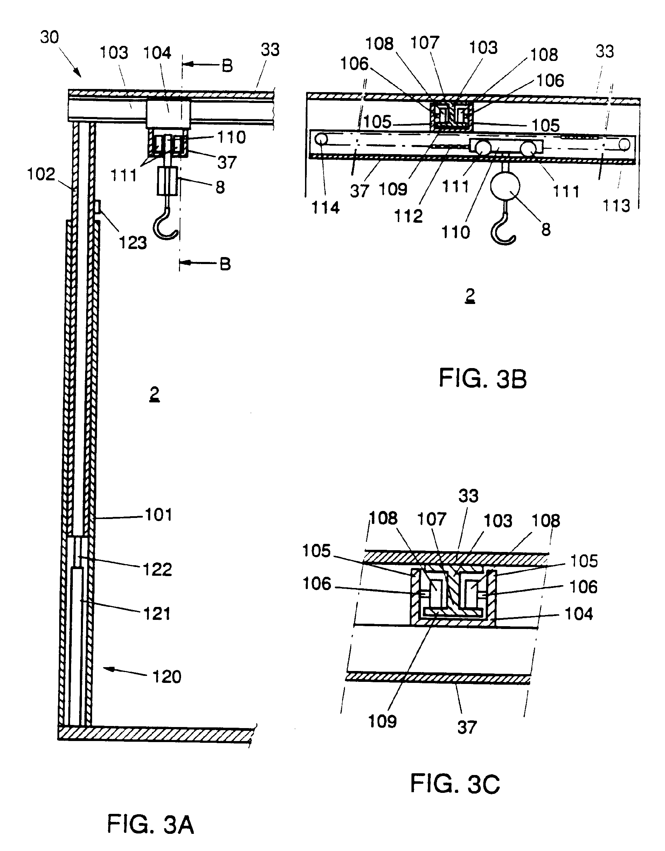

An embodiment of the transport vehicle 30 will now be discussed with reference to Figure 3A. A supporting frame comprising a number of hollow tubes 101 placed vertically along the side of the vehicle 30 is fixed on the chassis of the vehicle 30. A beam 102 is provided in a sliding manner in each tube 101, which beam can also be a hollow tube, with a view to saving weight. The tube systems 101, 102 can be placed at equal intervals from each other along each side of the vehicle 30, which equal intervals are, for example, approximately equal to 2.5 metres, while each tube system 101, 102 disposed on one side of the vehicle 30 has a corresponding tube system 101′, 102′ (not shown) on the other side of the vehicle 30, at the same position calculated in the lengthwise direction of the vehicle 30.

At its top end each tube 102 is connected by means of a horizontal beam 103, directed at right angles to the lengthwise direction of the vehicle 30, to the top end of the corresponding tube 102′. In the example shown the beam 103 is an I-beam. With their top sides the I-beams 103 bear the actual ceiling 33 of the loading space 2. With their bottom sides the I-beams 103 bear the conveyor track 37.

As shown in Figure 3A, the vehicle is provided with a height adjustment element 120, in the example shown a hydraulic cylinder/piston combination 121, 122 disposed in the tube 101. Each tube system 101, 102 and 101′, 102′ is preferably provided with such a cylinder/piston combination 121, 122. If fluid is fed to the cylinder 121 through means which are known per se, the piston 122 will be pressed out of the cylinder 121, as a result of which the tube 102 is displaced vertically in the tube 101. It is thus possible to move the horizontal I-beams 103, and thereby the ceiling 33 and the conveyor track 37, vertically, as described above. The maximum vertical movement is in principle limited here only by the maximum stroke of the cylinder/piston combination 121, 122. In order to ensure a well-defined lower end position of the ceiling 33 and the conveyor track 37, the tube 102, for example, can be provided externally with a stop element 123 which in the abovementioned end position rests against the top side of the tube 101.

It is an advantage if the conveyor track 37 is also horizontally movable at right angles to its lengthwise direction. It is then simple to manoeuvre the object 40, hanging from the pulley 8, to its desired location in the loading space 2, for example against the left wall 5 of the loading space 2, as illustrated in Figure 2A. Before the ceiling 33 and the conveyor track 37 are moved to the lowest end position illustrated in Figure 2B, the conveyor track 37 is then first taken away from above the object 40 by a lateral displacement of the conveyor track 37.

Such a preferred embodiment is illustrated in Figures 3A - 3C. A U-shaped bearing element 104 is coupled to each I-beam 103. From the upright walls 105 of the U-shaped bearing element 104 wheel axles 106 extend to the body 107 of the I-beam 103 in question, on which wheel axles 106 wheels 108 are fitted and can travel over the bottom flange 109 of the I-beam 103, as illustrated in greater detail in Figure 3C. Each U-shaped bearing element is thus displaceable along the corresponding I-beam 103, i.e. at right angles to the lengthwise direction of the vehicle 30. Since the U-shaped bearing elements 104 bear the conveyor track 37 with their underside, the conveyor track 37 is therefore laterally movable in its entirety in the space 2.

The figure also shows that a trolley 110, which is known per se, can travel by means of wheels 111 in the conveyor track 37, on the underside of which trolley the pulley 8 is fitted, as known per se. The movement of the trolley 110 is in this case produced by a conveyor chain 112 which is mounted between two chain wheels 113 and 114, the chain wheel 113 being situated at the front end of the conveyor track 37 and driven by a motor which is known per se and is fixed to the conveyor track 37, and for the sake of simplicity is not shown, while the chain wheel 114 is located at the rear end of the conveyor track 37.

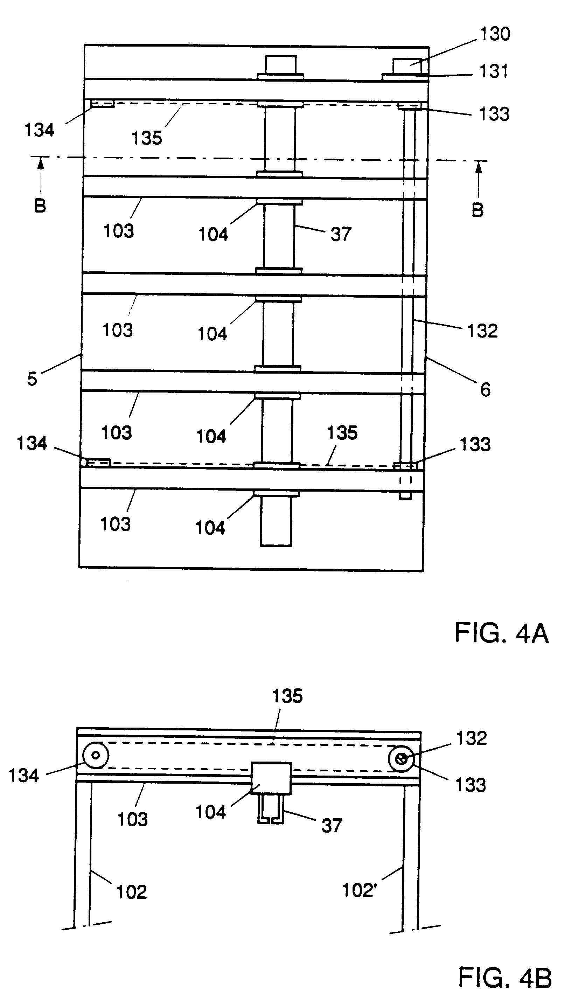

Figures 4A - 4B describe an example of a construction which serves to make the conveyor track 37 carry out its lateral movement. Near the front side of the vehicle 30 a motor 130 is fixed to a supporting frame 131 which is fixed to at least one of the vertically movable tubes 102, 102′. The motor 130, which is capable of being driven, for example, with the working voltage of a battery (24 V) present on board the vehicle, drives a shaft 132, which shaft 132 is disposed near the side wall 6 of the space 2 and extends through recesses into the I-beams 103. The shaft 132 is supported in a rotatable manner in bearings fixed to the I-beams 103, which can be any suitable bearings, e.g. ball bearings, and for the sake of simplicity are not shown.

At least two chain wheels 133 are fitted on the shaft 132, near an I-beam 103. In the embodiment shown in Figure 4A the chain wheels 133 are fitted near the front and the rear of the I-beams 103. The chain wheels can, however, also be fitted near other beams of the I-beams 103, while a chain wheel can be fitted near each I-beam 103 if desired.

A chain wheel 134, always associated with a chain wheel 133, is coupled to the corresponding I-beam 103 near the other side wall 105. A chain 135 is fixed around each set of associated chain wheels 133, 134, said chain being shown by a dashed line in the figures, and the ends thereof being fixed to the respective U-shaped element 104.

The shaft 132 is rotated by energising the motor 130, so that by means of the chain 135 the U-shaped elements 104, and thus the conveyor track 37, can be moved along the I-beams 103. Since the chains 135 are driven by the same shaft 132, the movements of the U-shaped elements 104 will be equal to each other, so that it is ensured that the conveyor track 37 remains parallel to the lengthwise direction of the vehicle 30.

It will be clear to an expert that it is sufficient to provide two of such chains 135 driven by the shaft 132.

It is advantageous if the rear end of the conveyor track 37 can be taken beyond the loading space 2.

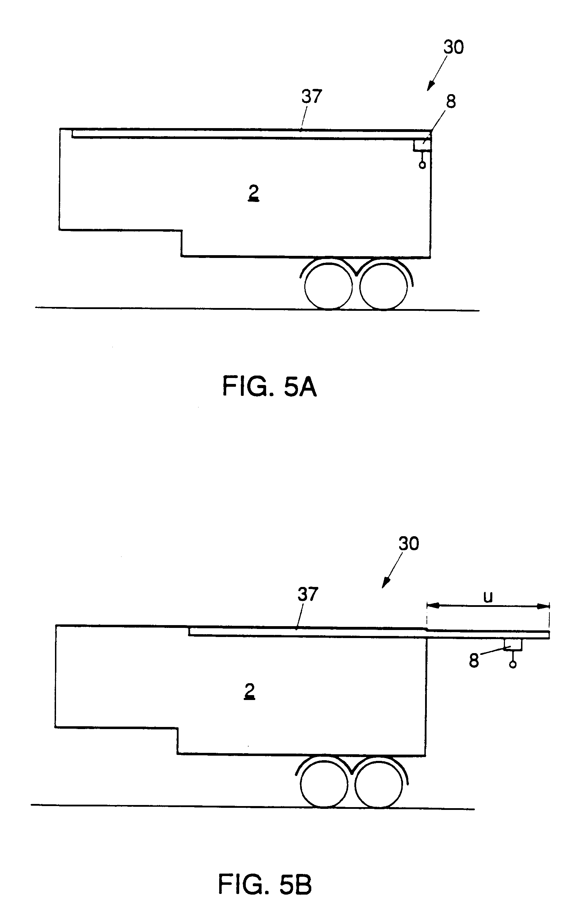

This can be achieved by, for example, providing the conveyor track 37 with an extension piece, but the conveyor track 37 is itself preferably movable in its lengthwise direction relative to the vehicle. In the transporting state of the vehicle (Figure 5A) the conveyor track 37 is completely inside the space 2, so that the doors of the loading space can be shut and the vehicle can travel in the traffic. In the loading/ unloading state of the vehicle (Figure 5B) the conveyor track 37 is moved backwards, so that the rear end of the conveyor track 37 extends over a distance U beyond the loading space 2. The maximum permitted value of this distance U is in fact limited only by strength requirements: the weight of the part of the conveyor track 37 extending beyond the loading space 2 plus the weight of the object carried by it exerts a couple which the suspension points of the part of the conveyor track 37 inside the loading space 2 must be able to handle, as will be clear to an expert.

An advantage of such a telescopic conveyor track is the fact that during loading the pulley 8 can be moved to above the centre of gravity of an object to be loaded, in order to lift the object, following which the lifted object can be taken to a storage place in the loading space, and that during unloading the object can be moved from the storage place until it is outside the vehicle and lowered there, always using one tool. The object can be of relatively great length here, greater than is possible if the conveyor track were not telescopic.

These advantages are reinforced if the telescopic conveyor track is also movable laterally.

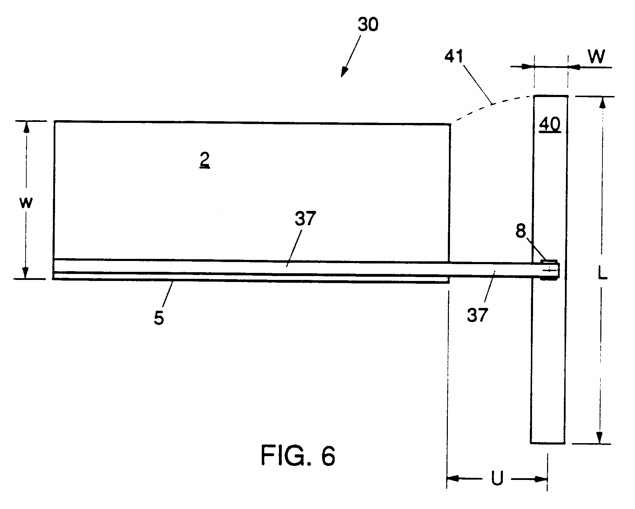

In the situation illustrated in Figure 6, the conveyor track 37 has been moved laterally until it is against the side wall 5 of the loading space 2. The length L of the object 40 to be carried can now easily be many times greater than twice the projection length U. During loading and/or unloading, the object 40 is then placed crosswise behind the vehicle 30, as illustrated in Figure 6. Of course, during its transportation, i.e. inside the space 2, the object 40 will have to be disposed with its lengthwise direction in the direction of the longitudinal axis of the transport vehicle 30. The changeover from this transport orientation to the above-mentioned crosswise orientation and vice versa can be carried out by turning the object 40 hanging from the pulley 8 about a vertical axis, as indicated by the circle segment 41. The only requirement here is that the object 40 should remain clear of the side of the space 2 during this turning movement. For a rectangular object the requirement is then that:

$$(L/2)^2 + (W/2)^2 \leqq U^2 + w^2$$

so that with a relatively small width W the maximum length $L_{max}$ is approximately equal to:

$$\sqrt{4U^2 + 4w^2}.$$

With a projection distance U of approximately 3 metres and an internal width of the loading space 2 of approximately 2.5 metres, the maximum permitted length $L_{max}$ of the object 40 is then approximately equal to 7.8 metres.

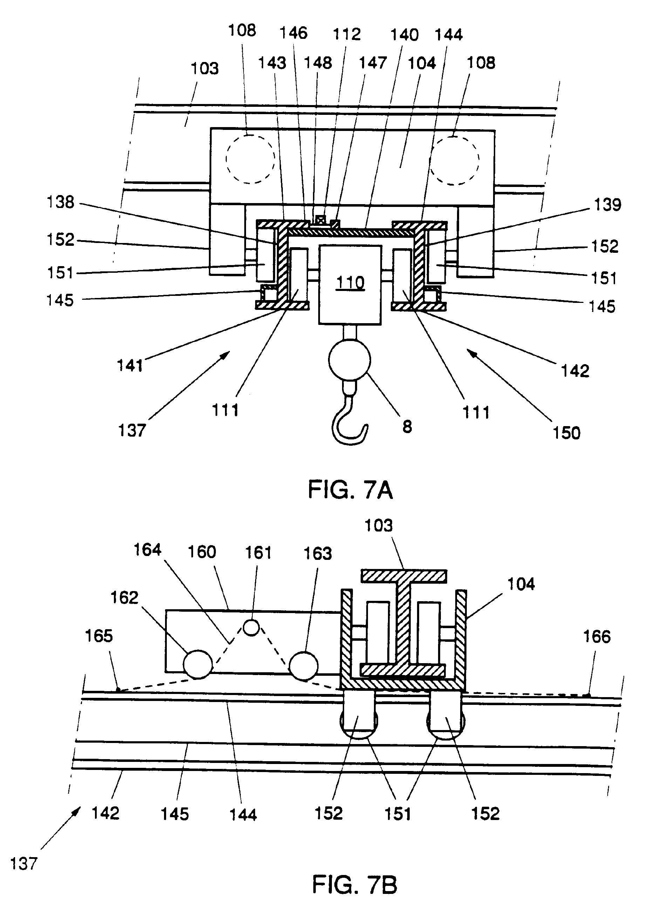

A preferred embodiment of an extendable conveyor track according to the invention will now be described in greater detail with reference to Figure 7A and the remaining figure.

Figure 7A shows a part of a cross-section of an embodiment, comparable to that of Figure 3A, with a conveyor track which is movable in its lengthwise direction, and which is in the form of an essentially rectangular tube 137 with side walls 138 and 139. The facing sides of the side walls 138 and 139 are designed to guide the trolley 110. The sides of the side walls 138 and 139 facing away from each other are designed to be guided along a conveyor track guide system 150 which is fixed to the underside of the U-shaped elements 104. A particularly compact structure is obtained in this way.

The embodiment of the tube 137 shown in Figure 7A is produced by setting up two I-beams forming the side walls 138, 139 parallel to each other and rigidly connecting them to each other at their top sides by means of a cross connection 140. This cross connection 140 can be made of a single plate of the same length as that of the I-beams 138, 139, but the cross connection 140 can also be composed of strips placed at a distance from each other.

The I-beams 138, 139 have bottom flanges 141, 142, of which the halves facing each other support and guide the wheels 111 of the trolley 110.

The I-beams 138, 139 also have top flanges 143, 144, of which the halves facing each other rest on guide wheels 151 of the conveyor track guide system 150. The guide wheels 151 are rotatably mounted in supports 152, which are in turn fixed to the undersides of the U-shaped elements 104.

Stops 145 are fitted on the halves of the bottom flanges 141, 142 facing away from each other, preferably over the entire length of the I-beams 138, 139. The stops 145 are normally not in contact with the guide wheels 151. If, however, the conveyor track 137 is extended so that the rear end extends beyond the space 2, and an object is carried by said rear end, the conveyor track 137 can be lifted at its front side by the weight outside the space 2. Such a tilting movement is limited through the fact that the stops 145 then come into contact with the guide wheels 151.

As described above with reference to Figure 3B, the trolley 10 is moved along the conveyor track 137 by means of a chain 112. Figure 7A shows that the chain 112 rests on the cross connection 140 and is confined in the lateral direction by chain guides 146, 147 fixed on the cross connection 140, in the example shown the top flange 143 of the I-beam 138 serving as chain guide 146. A chain support 148, for example a plastic slide element or a guide roller, can be fitted on the cross connection 140 between the chain guides 146, 147, in order to prevent wear of the chain 112.

Figure 7B shows an example of a construction for driving the lengthwise displacement of the conveyor track 137. Fixed to one of the U-shaped elements 104, for example the element 104 in the front position in the vehicle 30, is a supporting frame 160, going out from an upright wall 105 of the corresponding U-shaped element 104, and extending above the conveyor track 137. A chain wheel 161 is rotatably mounted on the supporting frame 160, which chain wheel 161 is driven by a motor, which for the sake of simplicity is not shown, and which is also fixed to the supporting frame 160. Two chain guide wheels 162 and 163 are fixed to the supporting frame 160 on either side and lower down than the chain wheel 161. A chain 164 shown by dotted lines in the figure is guided along the chain wheel 161 and the chain guide wheels 162 and 163, and is fixed by its ends 165 and 166 to the top side of the conveyor track 137.

When the abovementioned motor is driven, the chain wheel 161 rotates, and the chain 164 is moved along the chain guide wheels 162 and 163, causing the conveyor track 137 to move in its lengthwise direction relative to the corresponding U-shaped element 104 and therefore relative to the vehicle 30. The length of the chain 164, and the fixing points of its ends 165 and 166, are chosen in such a way that the conveyor track 137 can, on the one hand, take up its position inside the space 2 and, on the other, reach the desired projection length U out of the space 2, as will be clear to an expert.

With the design shown, it is even possible to move the conveyor track 137 in its lengthwise direction when an object is carried on it, so that the pulley 8 can be moved over a length which is greater than the length of the loading space 2.

It will be clear to an expert that it is possible to change or to modify the illustrated embodiments of the device according to the invention, without departing from the idea of the invention as defined by the claims. It is, for example, possible for other elements to be used for bringing about the horizontal and/or vertical movement of the conveyor track. It will also be clear that in an embodiment in which there is no need for a lateral displacement of the conveyor track 37 the U-shaped bearing elements 104 can be dispensed with, so that the conveyor track 37 can be fixed directly to the I-beams 103. A further height gain is achieved by this.

## Claims

1. Vehicle (30) with a loading space (2) for transporting objects (40), which vehicle (30) is provided with a conveyor track (37; 137) fitted in the top of the loading space (2) and running in the lengthwise direction of the vehicle (30), a displacement element (8, 110) movable along the conveyor track (37; 137), and gripping elements (9) coupled to the displacement element (8, 110) for gripping an object (40), characterised in that the conveyor track (37; 137) is movable vertically together with the ceiling (33) of the loading space (2).

2. Vehicle according to Claim 1, characterised in that the conveyor track (37; 137) is coupled to a number of beams (103) which are disposed near the ceiling (33) of the loading space (2), horizontally and at right angles to the lengthwise direction of the vehicle (30), which beams are fixed by their ends to vertically disposed beams (102, 102'), each vertical beam (102, 102') being disposed so that at its bottom side it is movable vertically in fixedly mounted tubes (101, 101').

3. Vehicle according to Claim 2, characterised in that a height adjustment element (120) is disposed between at least some of the abovementioned fixedly mounted tubes (101, 101') and the corresponding vertical beams (102, 102'), for operating the vertical movement of the conveyor track (37; 137).

4. Vehicle according to Claim 3, characterised in that the control element (120) comprises a hydraulic cylinder/piston combination (121, 122).

5. Vehicle according to at least one of Claims 1 - 4, characterised in that at least some of the abovementioned vertical beams (102, 102') are provided on the outside with a stop element (123) which in a lowest end position lies against the top side of the corresponding fixedly mounted tube (101, 101').

6. Vehicle according to at least one of Claims 1 - 5, characterised in that the conveyor track (37; 137) is movable in its lengthwise direction.

7. Vehicle according to Claim 6, characterised in that the conveyor track (37; 137) is in the form of an essentially rectangular tube (137) with side walls (138, 139) which on their inside are designed to guide the displacement element (8, 110) and on their outsides are designed to be guided along a conveyor track guide system (150).

8. Vehicle according to Claim 7, characterised in that each side wall (138, 139) of the conveyor track (137) comprises an I-beam, which I-beams are rigidly connected to each other at their top sides, the facing halves of the bottom flanges (141, 142) of the I-beams (138, 139) guiding the displacement element (8, 110), and the halves of the top flanges (143, 144) of the I-beams (138, 139) facing away from each other resting on guide wheels (151).

9. Vehicle according to at least one of Claims 6 - 8, characterised in that the movement of the conveyor track (137) in its lengthwise direction is produced by means of a chain (164) fixed on the top side of the conveyor track (137) and driven by a chain wheel (161) fixed to a U-shaped element (104).

10. Vehicle according to at least one of the preceding claims, characterised in that the conveyor track (37; 137) is movable horizontally at right angles to its lengthwise direction.

11. Vehicle according to Claim 10, characterised by a number of I-beams (103) disposed horizontally and at right angles to the lengthwise direction of the vehicle near the ceiling (33) of the loading space (2), each of which beams is provided on the underside with an essentially U-shaped element (104), the legs (105) of each U-shaped element (104) being provided on the inside with wheels (108) which face the body (107) of the corresponding I-beam (103), and each U-shaped element (104) being coupled at its underside to the conveyor track (37; 137).

12. Vehicle according to Claim 11, characterised in that the abovementioned guide wheels (151) are fitted on the underside of the abovementioned U-shaped elements (104).

13. Vehicle according to at least one of Claims 10 - 12, characterised in that provision is made near one side wall (6) for a shaft (132) running in the lengthwise direction of the vehicle (30), which shaft is provided at at least two places with a chain wheel (133); in that near the other side wall (5) provision is made for chain wheels (134) associated with the chain wheels (133); in that a chain (135) is fixed around each pair of associated chain wheels (133, 134), the ends of which chain are fastened to a U-shaped element (104); and in that the shaft (132) can be rotated by means of a motor, in order to move the conveyor track (37; 137) laterally.

14. Method for loading/unloading of a vehicle according to at least one of the preceding claims, characterised in that, prior to the actual loading/ unloading, the conveyor track (37; 137) is moved vertically upwards and in that, after the actual loading/ unloading is completed, the conveyor track (37; 137) is returned to the initial position.

15. Method for loading/unloading of a vehicle according to Claim 12, characterised in that, prior to the actual loading/unloading, the conveyor track (37; 137) is moved vertically upwards and also along its lengthwise direction, so that it extends beyond the loading space (2), and in that, after the actual loading/unloading is completed, the conveyor track (37; 137) is returned to the initial position.

**Patentansprüche**

1. Fahrzeug (30) mit einem Laderaum (2) zum Befördern von Gegenständen (40), welches Fahrzeug (30) mit einer oben im Laderaum (2) angebrachten und in Längsrichtung des Fahrzeugs (30) verlaufenden Förderbahn (37; 137), einem über die Förderbahn (37; 137) bewegbaren Verschiebungsorgan (8, 110) und mit dem Verschiebungsorgan (8, 110) gekuppelten Greiforganen (9) zum Ergreifen eines Gegenstandes (40) versehen ist;
dadurch gekennzeichnet, daß die Förderbahn (37; 137) zusammen mit der Decke (33) des Laderaumes (2) vertikal verschiebbar ist.

2. Fahrzeug nach Anspruch 1, dadurch gekennzeichnet, daß die Förderbahn (37; 137) an eine Anzahl nahe der Decke (33) des Laderaumes (2) horizontal und quer zur Längsrichtung des Fahrzeugs (30) angeordneter Balken (103) gekuppelt ist, welche Balken mit ihren Enden an vertikal angeordneten Balken (102, 102′) befestigt sind, wobei jeder vertikale Balken (102, 102′) an seiner Unterseite vertikal verschiebbar in ortsfest angebrachten Rohren (101, 101′) angeordnet ist.

3. Fahrzeug nach Anspruch 2, dadurch gekennzeichnet, daß zwischen mindestens einigen der genannten ortsfest angebrachten Rohren (101, 101′) und den zugeordneten vertikalen Balken (102, 102′) ein Höhenverstellorgan (120) zum Betätigen der vertikalen Verschiebung der Förderbahn (37; 137) angeordnet ist.

4. Fahrzeug nach Anspruch 3, dadurch gekennzeichnet, daß das Betätigungsorgan (120) eine hydraulische Zylinder-Kolben-Kombination (121, 122) umfaßt.

5. Fahrzeug nach mindestens einem der Ansprüche 1-4, dadurch gekennzeichnet, daß mindestens einige der genannten vertikalen Balken (102, 102′) an der Außenseite mit einem Anschlagorgan (123) versehen sind, das in einer untersten Endstellung an der Oberseite des zugeordneten ortsfest angebrachten Rohres (101, 101′) anliegt.

6. Fahrzeug nach mindestens einem der Ansprüche 1-5, dadurch gekennzeichnet, daß die Förderbahn (37; 137) in ihrer Längsrichtung verschiebbar ist.

7. Fahrzeug nach Anspruch 6, dadurch gekennzeichnet, daß die Förderbahn (37; 137) als ein im wesentlichen rechteckiges Rohr (137) mit Seitenwänden (138, 139) ausgebildet ist, die an ihren Innenseiten eingerichtet sind, das Verschiebungsorgan (8, 110) zu führen und an ihren Außenseiten eingerichtet sind, über ein Förderbahnführungssystem (150) geführt zu werden.

8. Fahrzeug nach Anspruch 7, dadurch gekennzeichnet, daß jede Seitenwand (138, 139) der Förderbahn (137) einen I-Balken umfaßt, welche I-Balken an ihren Oberseiten starr miteinander verbunden sind, wobei die einander zugewandten Hälften der Unterflansche (141, 142) der I-Balken (138, 139) das Verschiebungsorgan (8, 110) führen und wobei die voneinander abgewandten Hälften der Oberflansche (143, 144) der I-Balken (138, 139) auf Führungsrädern (151) abgestützt sind.

9. Fahrzeug nach mindestens einem der Ansprüche 6-8, dadurch gekennzeichnet, daß die Verschiebung der Förderbahn (137) in ihrer Längsrichtung durch eine an der Oberseite der Förderbahn (137) befestigte und von einer an einem U-förmigen Organ (104) befestigten Kettenrad (161) angetriebene Kette (164) bewirkt wird.

10. Fahrzeug nach mindestens einem der vorhergehenden Ansprüche, dadurch gekennzeichnet, daß die Förderbahn (37; 137) quer zu ihrer Längsrichtung horizontal verschiebbar ist.

11. Fahrzeug nach Anspruch 10, gekennzeichnet durch eine Anzahl nahe der Decke (33) des Laderaumes (2) horizontal und quer zur Längsrichtung des Fahrzeugs angeordneter Balken (103), die je an der Unterseite mit einem im wesentlichen U-förmigen Organ (104) versehen sind, wobei die Schenkel (105) jedes U-förmigen Organs (104) an der Innenseite mit Rädern (108) versehen sind, die gegen den Steg (107) des zugeordneten I-Balkens (103) gerichtet sind, und wobei jedes U-förmige Organ (104) an seiner Unterseite mit der Förderbahn (37; 137) gekuppelt ist.

12. Fahrzeug nach Anspruch 11, dadurch gekennzeichnet, daß die genannten Führungsräder (151) an der Unterseite der genannten U-förmigen Organe (104) angebracht sind.

13. Fahrzeug nach mindestens einem der Ansprüche 10-12, dadurch gekennzeichnet, daß nahe einer Seitenwand (6) eine in Längsrichtung des Fahrzeugs (30) verlaufende Welle (132) vorgesehen ist, die an mindestens zwei Stellen mit einem Kettenrad (133) versehen ist; daß nahe der anderen Seitenwand (5) den Kettenrädern (133) zugeordnete Kettenräder (134) vorgesehen sind; daß um jedes Paar zugeordneter Kettenräder (133, 134) eine Kette (135) aufgespannt ist, deren Enden an einem U-förmigen Organ (104) befestigt sind; und daß die Welle (132) durch einen Motor rotiert werden kann, um die Förderbahn (37; 137) seitlich zu verschieben.

14. Verfahren zum Laden/Entladen eines Fahrzeugs nach mindestens einem der vorhergehenden Ansprüche, dadurch gekennzeichnet, daß vor dem eigentlichen Laden/Entladen die Förderbahn (37; 137) vertikal nach oben verschoben wird und daß nach dem eigentlichen Laden/Entladen die Förderbahn (37; 137) in die Ausgangsstellung zurückgebracht wird.

15. Verfahren zum Laden/Entladen eines Fahrzeugs nach Anspruch 12, dadurch gekennzeichnet, daß vor dem eigentlichen Laden/Entladen die Förderbahn (37; 137) vertikal nach oben und zugleich in ihrer Längsrichtung verschoben wird, so daß diese sich bis außerhalb des Laderaumes (2) erstreckt, und daß nach nach dem eigentlichen Laden/Entladen die Förderbahn (37; 137) in die Ausgangsstellung zurückgebracht wird.

## Revendications

1. Véhicule (30) comportant un espace de chargement (2) pour le transport d'objets (40), ce véhicule (30) étant doté d'un rail transporteur (37; 137) installé au sommet de l'espace de chargement (2) et se déplaçant dans la direction longitudinale du véhicule (30), un élément de déplacement (8, 110) pouvant se déplacer le long du rail transporteur (37; 137), et des éléments de saisie (9) accouplés à l'élément de déplacement (8, 110) en vue de saisir un objet (40), caractérisé en ce que la bande transporteuse (37; 137) peut se déplacer verticalement avec le plafond (33) de l'espace de chargement (2).

2. Véhicule selon la revendication 1, caractérisé en ce que le rail transporteur (37; 137) est accouplé à un certain nombre de poutres (103) qui sont disposées à proximité du plafond (33) de l'espace de chargement (2), horizontalement et à angle droit par rapport à la direction longitudinale du véhicule (30), ces poutres étant fixées par leurs extrémités à des poutres (102, 102') disposées verticalement, chaque poutre verticale (102, 102′) étant disposée de telle sorte que du côté de sa base elle peut être déplacée verticalement dans des tubes (101, 101′) montés fixement.

3. Véhicule selon la revendication 2, caractérisé en ce qu'un élément (120) d'ajustement en hauteur est disposé entre au moins certains des tubes (101, 101′) montés fixement mentionnés plus haut et les poutres verticales (102, 102′) correspondantes, pour effectuer le déplacement vertical du rail transporteur (37; 137).

4. Véhicule selon la revendication 3, caractérisé en ce que l'élément de commande (120) comporte une combinaison d'un cylindre et d'un piston hydraulique (121, 122).

5. Véhicule selon au moins une des revendications 1 à 4, caractérisé en ce qu'au moins certaines des poutres verticales (102, 102′) mentionnées plus haut sont dotées du côté extérieur d'un élément d'arrêt (123), qui dans une position extrême basse repose contre le côté supérieur du tube (101, 101′) monté fixement correspondant.

6. Véhicule selon au moins l'une des revendication 1-5, caractérisé en ce que le rail transporteur (37; 137) peut être déplacé dans sa direction longitudinale.

7. Véhicule selon la revendication 6, caractérisé en ce que le rail transporteur (37; 137) présente la forme d'un tube essentiellement rectangulaire (137) comportant des parois latérales (138, 139), qui sur le côté intérieur sont conçues pour guider l'élément de déplacement (8, 110) et sur leur côté extérieur sont conçues pour être guidées le long d'un système de guidage (150) du rail transporteur.

8. Véhicule selon la revendication 7, caractérisé en ce que chaque paroi latérale (138, 139) du rail transporteur (137) comporte une poutre en I, ces poutres en I étant rigidement raccordées l'une à l'autre sur leur côté supérieur, les moitiés, qui se font face, des ailes de base (141, 142) des poutres en I (138, 139) guidant l'élément de déplacement (8, 110), et les moitiés, qui se tournent mutuellement le dos, des ailes supérieures (143, 144) des poutres en I (138, 139) reposant sur des roues de guidage (151).

9. Véhicule selon au moins l'une des revendications 6-8, caractérisé en ce que le déplacement du rail transporteur (137) dans sa direction longitudinale est réalisé au moyen d'une chaîne (164) fixée sur le côté supérieur du rail transporteur (137), et entraînée par une roue à chaîne (161) fixée sur un élément (104) en forme de U.

10. Véhicule selon au moins une des revendications précédentes, caractérisé en ce que le rail transporteur (37; 137) peut être déplacé horizontalement à angle droit par rapport à sa longitudinale.

11. Véhicule selon la revendication 10, caractérisé par un nombre de poutres en I (103) disposées horizontalement et à angle droit par rapport à la direction longitudinale du véhicule, à proximité du plafond (33) de l'espace de chargement (2), chacune de ces poutres étant dotée sur la face inférieure d'un élément (104) essentiellement en forme de U, les ailes (105) de chaque élément (104) en forme de U étant dotées du côté intérieur de roues (108) qui font face au corps (107) de la poutre en I (103) correspondante, et chaque élément (104) en forme de U étant accouplé sur son côté inférieur au rail transporteur (37; 137).

12. Véhicule selon la revendication 11, caractérisé en ce que les roues de guidage (151) mentionnées plus haut sont installées sur le côté inférieur des éléments (104) en forme de U mentionnés plus haut.

13. Véhicule selon au moins l'une des revendications 10-12, caractérisé en ce qu'il est prévu à proximité d'une paroi latérale (6) un arbre (132) s'étendant dans la direction longitudinale du véhicule (30), cet arbre étant doté en au moins deux emplacements d'une roue à chaîne (133); en ce qu'à proximité de l'autre paroi latérale (5) il est prévu des roues à chaîne (134) associées aux roues (133); en ce qu'une chaîne (135) est fixée autour de chaque paire de roues à chaîne (133, 134) associées, les extrémités de cette chaîne étant fixées à un élément (104) en forme de U; et en ce que l'arbre (132) peut être mis en rotation au moyen d'un moteur, en vue de déplacer latéralement le rail transporteur (37; 137).

14. Procédé de chargement et de déchargement d'un véhicule selon au moins l'une des revendications précédentes, caractérisé en ce qu'avant le chargement ou le déchargement proprement dits, le rail transporteur (37; 137) est déplacé verticalement vers le haut, et en ce que lorsque le chargement ou le déchargement proprement dits sont terminés, le rail transporteur (37; 137) est renvoyé vers la position initiale.

15. Procédé de chargement et de déchargement d'un véhicule selon la revendication 12, caractérisé en ce qu'avant le chargement ou le déchargement proprement dits, le rail transporteur (37; 137) est déplacé verticalement vers le haut et également le long de sa direction longitudinale, de telle sorte qu'il s'étende au-delà de l'espace de chargement (2), et en ce que lorsque le chargement ou le déchargement proprement dits sont terminés, le rail transporteur (37; 137) est renvoyé vers la position initiale.

FIG. 1A

FIG. 1B

FIG. 2B

FIG. 2A

FIG. 3A

FIG. 3B

FIG. 3C

FIG. 4A

FIG. 4B

FIG. 5A

FIG. 5B

FIG. 6

FIG. 7A

FIG. 7B